# EUROPEAN PATENT SPECIFICATION

(11) **EP 4 044 395 B1**
(45) Date of publication and mention of the grant of the patent: **17.06.2026**
(21) Application number: 22156083.2
(22) Date of filing: 10.02.2022
(51) Int. Cl.: H02J 7/00, B60L 1/00, B60L 58/12, H02J 7/14, B60L 50/61, B60L 58/16

(54) **VEHICLE CONTROL DEVICE**
FAHRZEUGSTEUERUNGSVORRICHTUNG
DISPOSITIF DE COMMANDE DE VÉHICULE

(30) Priority: 15.02.2021 JP 2021021824
(43) Date of publication of application: 17.08.2022
(73) Proprietor: TOYOTA JIDOSHA KABUSHIKI KAISHA, Toyota-shi, Aichi-ken, 471-8571 (JP)
(72) Inventor: YASHIRO, Motoki, Toyota-shi, 471-8571 (JP)
(74) Representative: D Young & Co LLP

(56) References cited:
- EP-A2- 1 254 805
- US-A1- 2015 291 051
- US-A1- 2016 046 292
- US-A1- 2017 096 078

## Description

### BACKGROUND OF THE INVENTION

### 1. Field of the Invention

The present invention relates to a vehicle control device.

### 2. Description of Related Art

Vehicles are equipped with a power generation device, a battery, and auxiliaries, and the battery is charged with electricity generated by the power generation device and discharges the electricity to the auxiliaries to drive the auxiliaries (e.g., see Japanese Unexamined Patent Application Publication No. 2019-078572).
US 2016/046292 A1 discloses a charge control device, a vehicle control device, a vehicle, a charge control method and a vehicle control method.

### SUMMARY OF THE INVENTION

Such a battery is repeatedly charged and discharged while the vehicle is driven, and the larger the amount of electricity discharged is, the further the degradation of the battery performance progresses.

An object of the present invention is to provide a vehicle control device that slows the progress of degradation of battery performance.

This object can be achieved by a vehicle control device that is applied to a vehicle having a power generation device, a battery charged with electricity generated by the power generation device, and an auxiliary driven with electricity discharged from the battery, and that includes: a power generation mode selection unit that, when an electrical load of the auxiliary is lower than a threshold value, selects a maintenance mode as a power generation mode of the power generation device in which a charging rate of the battery is maintained at a first target value, and when the electrical load is equal to or higher than the threshold value, selects a high-voltage mode as the power generation mode in which the voltage of electricity generated by the power generation device is maintained at a higher voltage than the voltage of electricity generated in the maintenance mode such that the charging rate assumes a higher value than the first target value; and a power generation control unit that, when the charging rate at the time of switching from the high-voltage mode to the maintenance mode is equal to or higher than a second target value that is a higher value than the first target value, controls the power generation device so as to maintain the charging rate in the maintenance mode at the second target value.

The vehicle may have an ignition switch, and the power generation control unit may control the power generation device so as to maintain the charging rate in the first maintenance mode since the ignition switch has been turned on at the first target value.

The vehicle control device may include a first acquisition unit that acquires an ambient temperature parameter correlated with an ambient temperature of the battery, and a first calculation unit that calculates the second target value as a higher value as the ambient temperature indicated by the ambient temperature parameter becomes higher.

The vehicle control device may include a second acquisition unit that acquires a cumulative service period parameter correlated with a cumulative service period of the battery, and a second calculation unit that calculates the second target value as a higher value as the cumulative service period indicated by the cumulative service period parameter becomes longer.

The present invention can provide a vehicle control device that slows the progress of degradation of battery performance.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram showing relationships among an engine, an alternator, a battery, auxiliaries, and an ECU that are mounted in a vehicle;
FIG. 2 is a graph showing a relationship between an amount of electricity discharged per day from the battery and a performance degradation withstanding time of the battery;
FIG. 3 is a timing chart showing changes in the voltage of electricity generated by the alternator, the electrical load of the auxiliaries, and the SOC of the battery according to a power generation mode;
FIG. 4 is a flowchart showing one example of power generation control;
FIG. 5 is a flowchart showing a first modified example of the power generation control;
FIG. 6 is a map specifying a target value T2 according to an outside air temperature;
FIG. 7 is a flowchart showing a second modified example of the power generation control; and
FIG. 8 is a map specifying the target value T2 according to a cumulative service period of the battery.

### DETAILED DESCRIPTION OF EMBODIMENTS

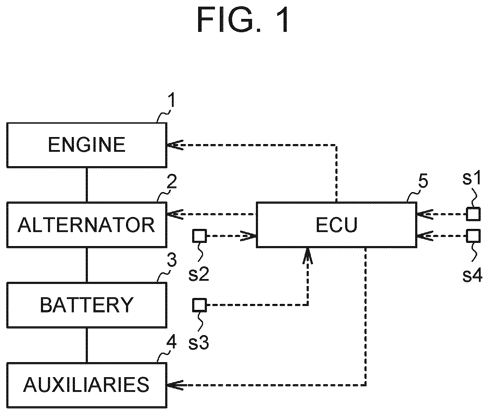

FIG. 1 is a schematic diagram showing relationships among an engine 1, an alternator 2, a battery 3, auxiliaries 4, and an electronic control unit (ECU) 5 that are mounted in a vehicle. The vehicle is an engine vehicle that travels on drive power from the engine 1.

The engine 1 is a source of drive power for the vehicle to travel, and is, for example, a four-cylinder gasoline engine. However, the number of the cylinders is not limited thereto, and the engine may be a diesel engine. The engine 1 is configured such that an operating state can be controlled through a throttle valve opening degree (intake air amount), a fuel injection amount, an ignition timing, etc. A rotor of the alternator 2 is mechanically connected to a crankshaft of the engine 1.

The alternator 2 can generate electricity by rotation of the engine 1. In the alternator 2, the voltage of electricity generated is adjusted to thereby adjust the amount of electricity generated. The electricity generated by the alternator 2 is charged to the battery 3. Specifically, the alternator 2 includes an alternating-current power generator that generates an alternating current by electromagnetic induction between a stator and a rotor, an IC regulator that controls the voltage of electricity generated by the alternating-current power generator, and a converter that converts an alternating current into a direct current. The ECU 5 controls the IC regulator and thereby controls the voltage of electricity generated by the alternating-current power generator, i.e., the voltage of electricity generated by the alternator 2. The alternator 2 is one example of the power generation device.

The alternator 2 and the auxiliaries 4 are electrically connected to the battery 3, and the electricity generated by the alternator 2 is stored in the battery 3 and the electricity stored in the battery 3 is discharged to the auxiliaries 4. The battery 3 is, for example, a lead-acid battery with a rated voltage of 12V, but is not limited thereto and may also be a lithium-ion battery or a nickel-metal hydride battery. The charging rate (hereinafter referred to as a state of charge (SOC)) of the battery 3 is controlled so as to meet a target value to be described later. This control is feedback control by the ECU 5. This feedback control involves controlling the voltage of electricity generated by the alternator 2 that is detected by a voltage sensor s2, to be described later, and maintaining the SOC detected by an SOC sensor s3, to be described later, at a target value.

The auxiliaries 4 are various electrical devices provided in the vehicle and driven with electricity discharged from the battery 3. Examples of the auxiliaries 4 include a headlight, blower fan, windshield wiper, hazard lamp, meter panel, audio system, seat heater, electric power steering system, and navigation system.

The ECU 5 is configured to control the vehicle. The ECU 5 includes a central processing unit (CPU), a read-only memory (ROM), and a random-access memory (RAM). The ECU 5 executes power generation control, to be described later, in accordance with a control program that is stored in the ROM in advance, based on information from sensors, information stored in the ROM in advance, etc. Further, as will be described in detail later, the ECU 5 functionally realizes a power generation mode selection unit and a power generation control unit. An ignition switch s1 that detects turning on and off of ignition, the voltage sensor s2 that detects the voltage of electricity generated by the alternator 2, the SOC sensor s3 that detects the SOC of the battery 3, and an outside air temperature sensor s4 that detects the outside air temperature are electrically connected to the ECU 5. The ECU 5 is one example of the vehicle control device.

### Degradation of Battery Performance

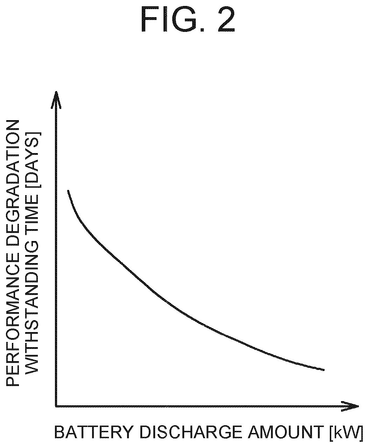

Next, degradation of the performance of the battery 3 will be described. FIG. 2 is a graph showing a relationship between an amount of electricity discharged per day from the battery 3 [kW] and a performance degradation withstanding time of the battery 3 [day]. In FIG. 2, the abscissa represents the amount of electricity discharged per day from the battery 3 and the ordinate represents the performance degradation withstanding time of the battery 3. The performance degradation withstanding time refers to a maximum time for which the performance of the battery 3 can be regarded as not degraded. As shown in FIG. 2, the larger the amount of electricity discharged per day from the battery 3 becomes, the shorter the performance degradation withstanding time of the battery 3 becomes, which indicates that performance degradation of the battery 3 is progressing. This is because when the amount of electricity discharged from the battery 3 is large, an active material applied to a positive-electrode lattice of the battery 3 softens and partially peels off or shrinks, causing an increase in the internal resistance of the battery 3. The ECU 5 in this embodiment slows the progress of performance degradation of the battery 3 by reducing the amount of electricity discharged from the battery 3 as will be described later.

### Power Generation Mode

The ECU 5 determines whether the electrical load of the auxiliaries 4 is lower than a threshold value α, and when the electrical load of the auxiliaries 4 is lower than the threshold value α, selects a maintenance mode as a power generation mode of the alternator 2, and when the electrical load of the auxiliaries 4 is equal to or higher than the threshold value α, selects a high-voltage mode. When the maintenance mode is selected as the power generation mode, the ECU 5 controls the alternator 2 such that the SOC of the battery 3 is maintained at a target value T1. Thus, the maintenance mode is selected when the electrical load of the auxiliaries 4 is relatively low, so that the ratio of part of an output of the engine 1 that is used for power generation in the alternator 2 can be reduced compared with that in the high-voltage mode to be described below, and a decrease in the fuel efficiency can be thereby mitigated.

In the high-voltage mode, the ECU 5 controls the alternator 2 such that the voltage of electricity generated by the alternator 2 is maintained at a higher voltage than the voltage of electricity generated by the alternator 2 in the maintenance mode to thereby bring the SOC to a higher value than the target value T1. Thus, the high-voltage mode is selected when the electrical load of the auxiliaries 4 is relatively high, which can prevent shortage of electricity supplied to the auxiliaries 4.

The electrical load of the auxiliaries 4 is a value expressed in percentage, with 100 being a maximum value of the electrical load of the auxiliaries 4 when, for example, all the electrical devices of the auxiliaries 4 are in a driven state. The memory of the ECU 5 stores in advance an electrical load of each electrical device included in the auxiliaries 4 in its driven state, and the CPU of the ECU 5 calculates the electrical load of the auxiliaries 4 by adding up the electrical loads of the respective electrical devices that are in the driven state.

When at least one of predetermined electrical devices with relatively high electrical loads among the electrical devices included in the auxiliaries 4 is in the driven state, the electrical load of the auxiliaries 4 may be determined to be equal to or higher than the threshold value α, and when none of the predetermined electrical devices with relatively high electrical loads is in the driven state, the electrical load of the auxiliaries 4 may be determined to be lower than the threshold value α. Examples of the electrical devices with relatively high electrical loads include a headlight, blower fan, and windshield wiper. Examples of electrical devices with relatively low electrical loads include a meter panel, audio system, seat heater, electric power steering system, and navigation system. The electrical load of the auxiliaries 4 may be used, for example, as a total value of electricity required by electrical devices that are in the driven state.

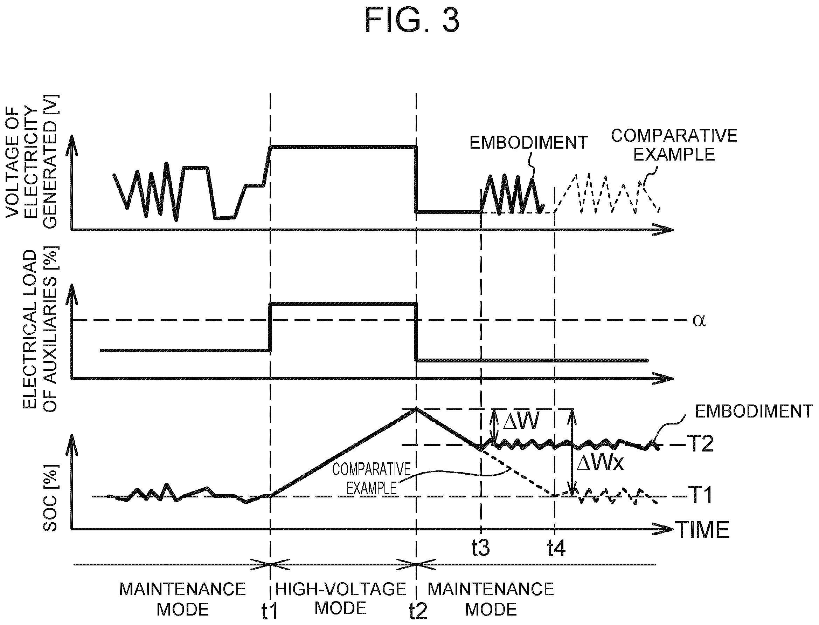

FIG. 3 is a timing chart showing changes in the voltage of electricity generated by the alternator 2, the electrical load of the auxiliaries 4, and the SOC of the battery 3 according to the power generation mode. FIG. 3 shows changes in these values under control of the embodiment and control of a comparative example, from a point immediately after the ignition switch s1 is turned on. Since the control of the embodiment and the control of the comparative example are the same up to time t3 to be described later, for the comparative example, only a part of the chart after time t3 will be described. In FIG. 3, values in the embodiment are indicated by thick lines and values in the comparative example are indicated by thin lines.

In the embodiment, after the ignition switch s1 is turned on, the maintenance mode is selected until time t1. In the maintenance mode after the ignition switch s1 is turned on, the voltage of electricity generated by the alternator 2 changes so as to maintain the SOC at the target value T1. Specifically, when the SOC decreases below the target value T1, the voltage of electricity generated by the alternator 2 rises, and when the SOC increases beyond the target value T1, the voltage of electricity generated by the alternator 2 decreases. The target value T1 is one example of the first target value.

When the electrical load of the auxiliaries 4 becomes equal to or higher than the threshold value α at time t1, the high-voltage mode is selected and the voltage of electricity generated by the alternator 2 is maintained at a constant high voltage that is higher than the voltage of electricity generated in the maintenance mode. Here, in the high-voltage mode, the voltage of electricity generated by the alternator 2 is maintained at a high value such that electricity generated by the alternator 2 exceeds consumed electricity consumed by the auxiliaries 4, and an extra portion of the generated electricity that is not consumed by the auxiliaries 4 is charged to the battery 3. Therefore, the SOC increases gradually from the target value T1.

At time t2, when the electrical load of the auxiliaries 4 becomes lower than the threshold value α and the high-voltage mode is switched to the maintenance mode, in the embodiment, the voltage of electricity generated by the alternator 2 is controlled at a low constant value until the SOC reaches the target value T2. In the embodiment, when the SOC reaches the target value T2 at time t3, the voltage of electricity generated by the alternator 2 changes such that the SOC is maintained at the target value T2. The target value T2 is a higher value than the target value T1 described above, and is a lower value than the SOC at the immediately preceding time t2 at which the high-voltage mode was switched to the maintenance mode. The target value T2 is a fixed value, for example, and stored in the memory of the ECU 5 in advance. Thus, in the embodiment, as will be described in detail later, when the SOC at the time of switching from the high-voltage mode to the maintenance mode is equal to or higher than the target value T2, in that maintenance mode, the SOC is maintained at the target value T2 and not at the target value T1. Therefore, an amount ΔW of electricity discharged from the battery 3 corresponds to the difference between the SOC and the target value T2 at time t2. Depiction of the voltage of electricity generated in the embodiment is omitted from a certain point after time t3. The target value T2 is one example of the second target value.

In the comparative example, by contrast, when the high-voltage mode is switched to the maintenance mode at time t2, the target value T1 is used also in that maintenance mode. Thus, in the comparative example, the voltage of electricity generated by the alternator 2 is controlled in a low state from time t2 at which the mode was switched to the maintenance mode until time t4 at which the SOC reaches the target value T1, and thereafter the SOC is maintained at the target value T1. In the comparative example, therefore, an amount ΔWx of electricity discharged from the battery 3 corresponds to the difference between the SOC and the target value T1 at time t2, and is larger than the amount ΔW of electricity discharged in the embodiment. Thus, the amount ΔW of electricity discharged in the embodiment is reduced compared with the amount ΔWx of electricity discharged in the comparative example. Accordingly, peeling off or shrinkage of the active material of the positive-electrode lattice of the battery 3 is further mitigated in the embodiment than in the comparative example, and thereby the progress of performance degradation of the battery 3 is further slowed in the embodiment than in the comparative example.

### Power Generation Control

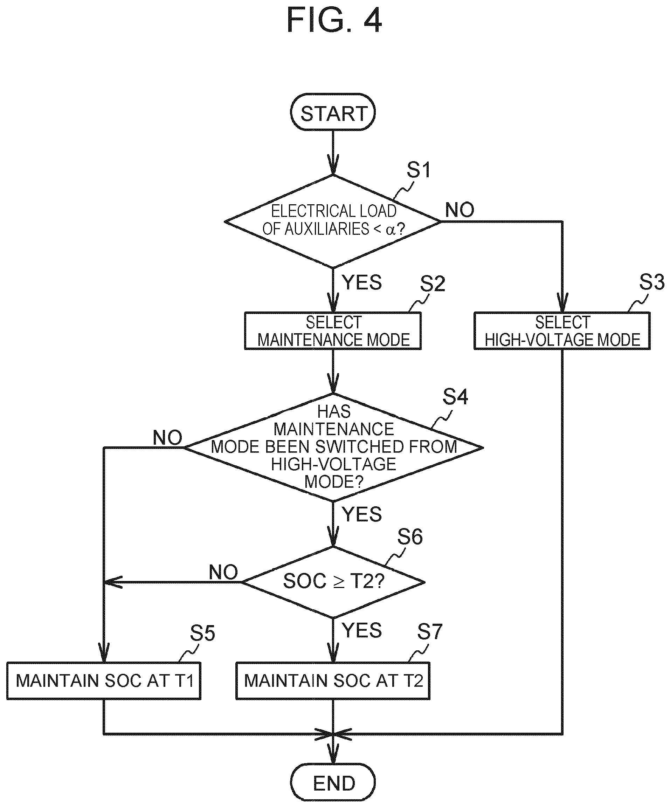

Next, power generation control executed by the ECU 5 will be described. FIG. 4 is a flowchart showing one example of the power generation control. This power generation control is repeatedly executed after the ignition switch s1 is turned on.

The ECU 5 determines whether the electrical load of the auxiliaries 4 is lower than the threshold value α (step S1). In the case of "Yes" in step S1, the ECU 5 selects the maintenance mode (step S2). In the case of "No" in step S1, the ECU 5 selects the high-voltage mode (step S3) and ends the current control. Steps S1, S2, and S3 are one example of processes executed by the power generation mode selection unit.

After the maintenance mode is selected, the ECU 5 determines whether the maintenance mode has been switched from the high-voltage mode (step S4). Specifically, the ECU 5 counts the number of times the maintenance mode has been selected since the ignition switch s1 has been turned on, and when this number of times of selection is two or larger, i.e., when the high-voltage mode has been selected and then switched to the maintenance mode at least once, the ECU 5 determines "Yes" in step S4. When turning off of the ignition switch s1 is detected, the ECU 5 resets the number of times the maintenance mode has been selected.

In the case of "No" in step S4, i.e., when the maintenance mode currently selected is the first maintenance mode since the ignition switch s1 has been turned on, the ECU 5 maintains the SOC at the target value T1 by the feedback control described above (step S5). Here, it is commonly known that the charging efficiency of the battery 3 decreases at a higher SOC, which causes a decrease in the fuel efficiency. For example, in the case where the vehicle is repeatedly driven in such a manner that one trip ends while the electrical load of the auxiliaries 4 remains lower than the threshold value α, avoiding a situation where the SOC is maintained at the higher target value T2 can mitigate the aforementioned decrease in the charging efficiency of the battery 3 and thereby mitigate the decrease in the fuel efficiency.

In the case of "Yes" in step S4, i.e., when the maintenance mode has been switched from the high-voltage mode, the ECU 5 determines whether the current SOC, i.e., the SOC at the time of switching from the high-voltage mode to the maintenance mode is equal to or higher than the target value T2 (step S6). In the case of "Yes" in step S6, the ECU 5 maintains the SOC at the target value T2 by the feedback control described above (step S7). The process of steps S4, S5, S6 and S7 is one example of processes executed by the power generation control unit.

In the case of "No" in step S6, i.e., when the SOC is lower than the target value T2, the ECU 5 maintains the SOC at the target value T1 (step S5). Here, examples of the case where the SOC is lower than the target value T2 include a case where the immediately preceding high-voltage mode has been switched to the maintenance mode before the SOC has increased to the target value T2 or higher in that high-voltage mode. This is because maintaining the SOC at the target value T2 when the SOC is thus lower than the target value T2 requires maintaining the voltage of electricity generated by the alternator 2 at a high voltage for a predetermined time to increase the SOC to the target value T2 despite the maintenance mode being selected, and doing so may reduce the fuel efficiency.

For example, the ECU 5 may execute the determination of step S6 at all times in a state where the high-voltage mode is selected. The ECU 5 may execute the process of step S5 when the mode is switched to the maintenance mode after a "No" determination is made in step S6, and may execute the process of step S7 when the mode is switched to the maintenance mode after a "Yes" determination is made in step S6. This is because the SOC increases gradually in the high-voltage mode, and therefore when the SOC becomes equal to or higher than the target value T2 in a state where the high-voltage mode is selected, the SOC at the time of subsequent switching to the maintenance mode can also be regarded as being equal to or higher than the target value T2.

As has been described above, when the SOC at the time of switching from the high-voltage mode to the maintenance mode is equal to or higher than the target value T2, the SOC is maintained at the target value T2 in the maintenance mode. Thus, the amount of electricity discharged from the battery 3 at the time of switching from the high-voltage mode to the maintenance mode can be reduced, and the progress of performance degradation of the battery 3 can be thereby slowed.

### First Modified Example of Power Generation Control

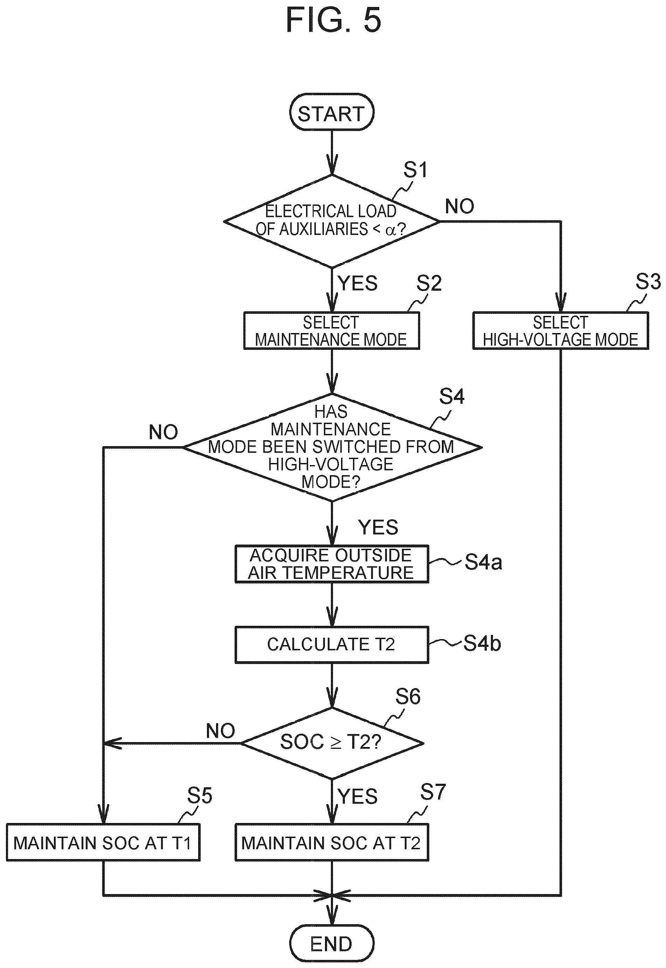

The target value T2 in the above embodiment is a prespecified fixed value, but the target value T2 may be calculated as a variable value as follows. FIG. 5 is a flowchart showing a first modified example of the power generation control. In the first modified example of the power generation control, description of the same processes as in the above embodiment will be omitted. In the first modified example of the power generation control, the ECU 5 functionally realizes processes of a first acquisition unit and a first calculation unit.

In the case of "Yes" in step S4, the ECU 5 acquires an outside air temperature by the outside air temperature sensor s4 (step S4a). The outside air temperature is one example of an ambient temperature parameter that indicates an ambient temperature of the battery 3. The process of step S4a is one example of processes executed by the first acquisition unit.

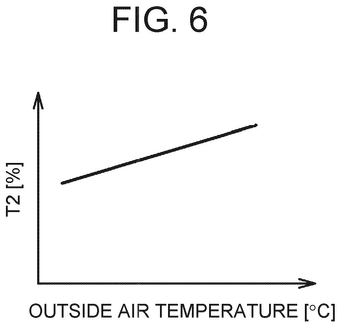

Next, the ECU 5 calculates the target value T2 with reference to the map shown in FIG. 6 (step S4b). FIG. 6 is a map that specifies the target value T2 according to the outside air temperature, with the abscissa representing the outside air temperature and the ordinate representing the target value T2. In this map, the target value T2 is specified as a higher value as the outside air temperature becomes higher. That is, the amount of electricity discharged from the battery 3 in the second or subsequent maintenance mode since the ignition switch s1 has been turned on is further reduced when the outside air temperature is higher. This is because even when the amount of electricity discharged from the battery 3 is the same, the performance of the battery 3 tends to degrade further when the outside air temperature is higher. In this way, the progress of performance degradation of the battery 3 can be slowed also when the vehicle is used in a region where the outside air temperature is high. The target value T2 is not limited to that in the map as described above, and may instead be calculated, for example, based on an arithmetic expression using the outside air temperature as a parameter. The process of step S4b is one example of processes executed by the first calculation unit.

Instead of the outside air temperature detected by the outside air temperature sensor s4, the temperature of intake air introduced into the engine 1 may be used, or the temperature of a coolant or lubricating oil in the engine 1 may be used. When these temperatures are high, that means that the ambient temperature of the battery 3 is also high. Thus, these temperatures are examples of the ambient temperature parameter of the battery 3.

### Second Modified Example of Power Generation Control

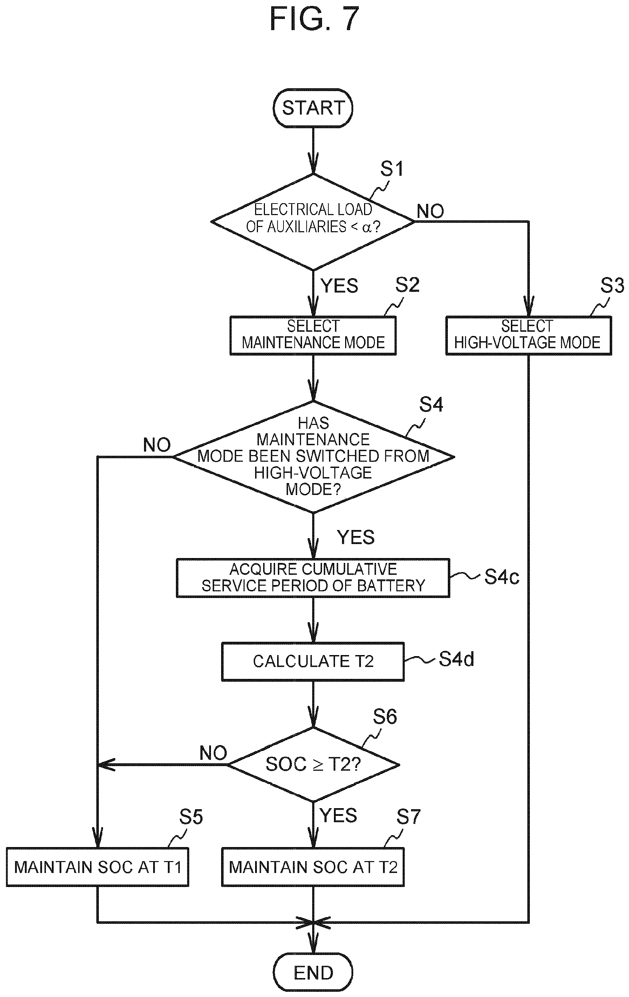

FIG. 7 is a flowchart showing a second modified example of the power generation control. In the second modified example of the power generation control, description of the same processes as in the above embodiment will be omitted. In the second modified example of the power generation control, the ECU 5 functionally realizes processes of a second acquisition unit and a second calculation unit.

In the case of "Yes" in step S4, the ECU 5 acquires a cumulative service period of the battery 3 (step S4c). The cumulative service period of the battery 3 is one example of a cumulative service period parameter. The ECU 5 counts a period for which the ignition switch s1 is on as the cumulative service period of the battery 3, based on the assumption that the battery 3 is always driven when the ignition switch s1 is on. The process of step S4c is one example of processes executed by the second acquisition unit.

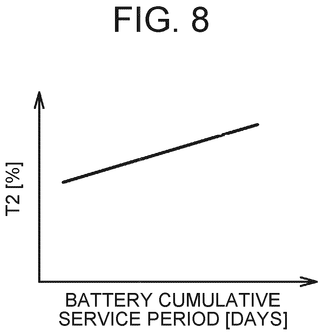

Next, the ECU 5 calculates the target value T2 with reference to the map shown in FIG. 8 (step S4d). FIG. 8 is a map specifying the target value T2 according to the cumulative service period of the battery 3, with the abscissa representing the cumulative service period of the battery 3 and the ordinate representing the target value T2. In this map, the target value T2 is specified as a higher value as the cumulative service period of the battery 3 becomes longer. That is, the amount of electricity discharged from the battery 3 in the second or subsequent maintenance mode since the ignition switch s1 has been turned on is further reduced when the cumulative service period of the battery 3 is longer. This is because the performance of the battery 3 tends to degrade further when the cumulative service period of the battery 3 is longer. In this way, the progress of performance degradation of the battery 3 can be slowed also when the cumulative service period of the battery 3 is long. The target value T2 is not limited to that in the map as described above, and may instead be calculated, for example, based on an arithmetic expression using the cumulative service period of the battery 3 as a parameter. The process of step S4d is one example of processes executed by the second calculation unit.

The target value T2 may be calculated based on a cumulative travel distance of the vehicle instead of the cumulative service period of the battery 3. This is because the cumulative service period of the battery 3 becomes longer as the cumulative travel distance of the vehicle becomes longer, and thus the cumulative travel distance of the vehicle is correlated with the cumulative service period of the battery 3. Also in this case, therefore, the target value T2 is calculated as a higher value as the cumulative travel distance of the vehicle becomes longer. In this case, the cumulative travel distance of the vehicle is one example of the cumulative service period parameter.

The target value T2 may be calculated by executing both the processes of steps S4a and S4c described above. That is, the target value T2 may be calculated as a higher value as the outside air temperature becomes higher and as the cumulative service period of the battery 3 becomes longer.

### Others

The above embodiment has been described based on the example of an engine vehicle including the engine 1 as a travel power source. However, the vehicle is not limited thereto and may instead be a hybrid electric vehicle including an engine and a motor as travel power sources. In the case of a hybrid electric vehicle, a motor and a DC-DC converter provided between the motor and a battery correspond to examples of the power generation device, and the ECU controls the DC-DC converter to thereby control electricity that is part of electricity generated by the motor and charged to the battery.

While the embodiment of the present invention has been described in detail above, the present invention is not limited to this specific embodiment and various modifications and changes can be made thereto within the scope of the present invention described in the claims.

## Claims

1. A vehicle control device applied to a vehicle having an ignition switch (s1), a power generation device (1), a battery (3) charged with electricity generated by the power generation device, and auxiliaries (4) driven with electricity discharged from the battery, the vehicle control device configured to execute power generation control after the ignition switch is turned on, the vehicle control device comprising:
a power generation mode selection unit that, when an electrical load of the auxiliaries is lower than a threshold value, is configured to select a maintenance mode as a power generation mode of the power generation device in which a state of charge of the battery is maintained at a first target value when the maintenance mode currently selected is a first maintenance mode since the ignition switch s1 has been turned on, and when the electrical load is equal to or higher than the threshold value, is configured to select a high-voltage mode as the power generation mode in which a voltage of electricity generated by the power generation device is maintained at a higher voltage than the voltage of electricity generated in the maintenance mode such that the state of charge assumes a higher value than the first target value, wherein the electrical load of the auxiliaries is a value expressed in percentage, with 100 being a maximum value of the electrical load of the auxiliaries when all electrical devices of the auxiliaries are in a driven state; and
a power generation control unit that, when the state of charge at a time of switching from the high-voltage mode to the maintenance mode is equal to or higher than a second target value that is a higher value than the first target value, is configured to control the power generation device so as to maintain the state of charge in the maintenance mode at the second target value.

2. The vehicle control device according to claim 1, comprising:
a first acquisition unit that is configured to acquire an ambient temperature parameter correlated with an ambient temperature of the battery; and
a first calculation unit that is configured to calculate the second target value as a higher value as the ambient temperature indicated by the ambient temperature parameter becomes higher.

3. The vehicle control device according to claim 1 or 2, comprising:
a second acquisition unit that is configured to acquire a cumulative service period parameter correlated with a cumulative service period of the battery; and
a second calculation unit that is configured to calculate the second target value as a higher value as the cumulative service period indicated by the cumulative service period parameter becomes longer.

## Patentansprüche

1. Fahrzeugsteuerungsvorrichtung, die auf ein Fahrzeug angewendet wird, das einen Zündschalter (s1), eine Leistungserzeugungsvorrichtung (1), eine Batterie (3), die mit Elektrizität geladen ist, die durch die Leistungserzeugungsvorrichtung erzeugt wird, und Hilfseinrichtungen (4), die mit Elektrizität angetrieben werden, die von der Batterie entladen wird, aufweist, wobei die Fahrzeugsteuerungsvorrichtung dazu ausgelegt ist, eine Leistungserzeugungssteuerung auszuführen, nachdem der Zündschalter eingeschaltet ist, wobei die Fahrzeugsteuerungsvorrichtung Folgendes umfasst:
eine Leistungserzeugungsmodusauswahleinheit, die, wenn eine elektrische Last der Hilfseinrichtungen niedriger als ein Schwellenwert ist, dazu ausgelegt ist, einen Wartungsmodus als einen Leistungserzeugungsmodus der Leistungserzeugungsvorrichtung auszuwählen, in dem ein Ladezustand der Batterie auf einem ersten Zielwert gehalten wird, wenn der derzeit ausgewählte Wartungsmodus ein erster Wartungsmodus ist, seit der Zündschalter s1 eingeschaltet wurde, und wenn die elektrische Last gleich oder höher als der Schwellenwert ist, dazu ausgelegt ist, einen Hochspannungsmodus als den Leistungserzeugungsmodus auszuwählen, in dem eine Spannung der durch die Leistungserzeugungsvorrichtung erzeugten Elektrizität auf einer höheren Spannung als die Spannung der in dem Wartungsmodus erzeugten Elektrizität gehalten wird, so dass der Ladezustand einen höheren Wert als der erste Zielwert annimmt, wobei die elektrische Last der Hilfseinrichtungen ein in Prozent ausgedrückter Wert ist, wobei 100 ein maximaler Wert der elektrischen Last der Hilfseinrichtungen ist, wenn sich alle elektrischen Vorrichtungen der Hilfseinrichtungen in einem angetriebenen Zustand befinden; und
eine Leistungserzeugungssteuerungseinheit, die, wenn der Ladezustand zu einer Zeit des Umschaltens von dem Hochspannungsmodus in den Wartungsmodus gleich oder höher als ein zweiter Zielwert ist, der ein höherer Wert als der erste Zielwert ist, dazu ausgelegt ist, die Leistungserzeugungsvorrichtung so zu steuern, dass der Ladezustand in dem Wartungsmodus auf dem zweiten Zielwert gehalten wird.

2. Fahrzeugsteuerungsvorrichtung nach Anspruch 1, die Folgendes umfasst:
eine erste Erfassungseinheit, die dazu ausgelegt ist, einen Umgebungstemperaturparameter zu erfassen, der mit einer Umgebungstemperatur der Batterie korreliert ist; und
eine erste Berechnungseinheit, die dazu ausgelegt ist, den zweiten Zielwert als einen höheren Wert zu berechnen, wenn die durch den Umgebungstemperaturparameter angegebene Umgebungstemperatur höher wird.

3. Fahrzeugsteuerungsvorrichtung nach Anspruch 1 oder 2, die Folgendes umfasst:
eine zweite Erfassungseinheit, die dazu ausgelegt ist, einen kumulativen Serviceperiodenparameter zu erfassen, der mit einer kumulativen Serviceperiode der Batterie korreliert ist; und
eine zweite Berechnungseinheit, die dazu ausgelegt ist, den zweiten Zielwert als einen höheren Wert zu berechnen, wenn die kumulative Serviceperiode, die durch den kumulativen Serviceperiodenparameter angegeben wird, länger wird.

## Revendications

1. Dispositif de commande de véhicule appliqué à un véhicule comportant un commutateur d'allumage (s1), un dispositif générateur d'énergie (1), une batterie (3) chargée en électricité générée par le dispositif générateur d'énergie, et des auxiliaires (4) entraînés par l'électricité déchargée de la batterie, le dispositif de commande de véhicule étant configuré pour exécuter une commande de génération d'énergie après l'activation du commutateur d'allumage, le dispositif de commande de véhicule comprenant :
une unité de sélection de mode de génération d'énergie, qui, lorsqu'une charge électrique des auxiliaires est inférieure à une valeur seuil, est configurée pour sélectionner un mode de maintenance en tant que mode de génération d'énergie du dispositif générateur d'énergie dans lequel un état de charge de la batterie est maintenu à une première valeur cible lorsque le mode de maintenance sélectionné est un premier mode de maintenance depuis que le commutateur d'allumage s1 a été activé, et lorsque la charge électrique est égale ou supérieure à la valeur seuil, est configurée pour sélectionner un mode haute tension en tant que mode de génération d'énergie dans lequel une tension d'électricité générée par le dispositif générateur d'énergie est maintenue à une tension supérieure à la tension d'électricité générée dans le mode de maintenance de sorte que l'état de charge prend une valeur supérieure à la première valeur cible, dans lequel la charge électrique des auxiliaires est une valeur exprimée en pourcentage, 100 étant une valeur maximale de la charge électrique des auxiliaires lorsque tous les équipements électriques des auxiliaires sont dans un état entraîné ; et
une unité de commande de génération d'énergie qui, lorsque l'état de charge à un instant de commutation du mode haute tension au mode de maintenance est égal ou supérieur à une seconde valeur cible supérieure à la première valeur cible, est configurée pour commander le dispositif générateur d'énergie de façon à maintenir l'état de charge dans le mode de maintenance à la seconde valeur cible.

2. Dispositif de commande de véhicule selon la revendication 1, comprenant :
une première unité d'acquisition configurée pour acquérir un paramètre de température ambiante corrélé à une température ambiante de la batterie ; et
une première unité de calcul configurée pour calculer la seconde valeur cible en tant que valeur supérieure lorsque la température ambiante indiquée par le paramètre de température ambiante augmente.

3. Dispositif de commande de véhicule selon la revendication 1 ou 2, comprenant :
une seconde unité d'acquisition configurée pour acquérir un paramètre de période de service cumulé corrélé à une période de service cumulé de la batterie ; et
une seconde unité de calcul configurée pour calculer la seconde valeur cible en tant que valeur supérieure lorsque la période de service cumulé indiquée par le paramètre de période de service cumulé augmente.
